# EUROPEAN PATENT APPLICATION

(11) **EP 4 753 116 A1**
(43) Date of publication of application: **03.06.2026**
(21) Application number: 25217888.4
(22) Date of filing: 24.11.2025
(51) Int. Cl.: H02K 1/32, H02K 9/19, H02K 1/276

(54) **ROTOR**

(30) Priority: 02.12.2024 JP 2024209713
(71) Applicant: Toyota Jidosha Kabushiki Kaisha, Toyota-shi, Aichi-ken 471-8571 (JP)
(72) Inventor: TAKENO, Motoki, TOYOTA-SHI, AICHI-KEN 471-8571 (JP); KAWASAKI, Shunsuke, TOYOTA-SHI, AICHI-KEN 471-8571 (JP); YAMATO, Fumiaki, TOYOTA-SHI, AICHI-KEN 471-8571 (JP); SAN JUAN JUANCHI, Hector, TOYOTA-SHI, AICHI-KEN 471-8571 (JP)
(74) Representative: Cabinet Beau de Loménie

(57) **Abstract**

A rotor (2; 102) of a motor, includes: a shaft (10; 110); a rotor core (20; 120) having a plurality of core blocks (22; 122), each of the core blocks (22; 122) including a plurality of magnets (44) and a refrigerant flow passage (46), the core blocks (22; 122) including a first core block (22a; 122a) and a second core block (22b; 122b); and at least one plate, the at least one plate including a refrigerant communication plate (26; 126) disposed between the first core block (22a; 122a) and the second core block (22b; 122b), and the refrigerant communication plate (26; 126) including a communication flow passage (27) that is configured to connect the refrigerant flow passage (46) of the first core block with the refrigerant flow passage (46) of the second core block (22b; 122b).

## Description

### BACKGROUND OF THE INVENTION

### 1. Field of the Invention

A technology disclosed by the present specification relates to a rotor. The "rotor" here is one of constituent parts of an electric motor (hereinafter also referred to simply as "motor").

### 2. Description of Related Art

Japanese Unexamined Patent Application Publication No. 2015-177706 (JP 2015-177706 A) describes a rotor. This rotor includes a shaft that extends along an axial direction, a rotor core having a plurality of core blocks that is provided on an outer circumferential surface of the shaft and arrayed along the axial direction, and a refrigerant supply plate that is provided on the outer circumferential surface of the shaft and arrayed together with the core blocks along the axial direction. In each of the core blocks, a plurality of magnets is disposed and a refrigerant flow passage extending along the axial direction is formed. The outer circumferential surface of the shaft is provided with a refrigerant supply port through which a refrigerant is discharged, and the refrigerant supply plate is provided with a refrigerant supply flow passage that is configured to connect the refrigerant supply port of the shaft with the refrigerant flow passages of the core blocks.

### SUMMARY OF THE INVENTION

In the rotor of the electric motor as described above, enabling smooth operation in a low-rotation region requires inhibiting a cogging torque caused by a magnetic force of the magnets disposed in the rotor. As one of methods to inhibit the cogging torque, providing stepped skew between adjacent core blocks is known. Here, providing stepped skew means providing a difference in position (i.e., orientation) in a circumferential direction between adjacent core blocks. Thus, the magnetic force in the circumferential direction is dispersed, which can inhibit generation of a cogging torque.

However, when stepped skew is provided between adjacent core blocks, the positions of the refrigerant flow passages provided in the respective core blocks are also misaligned from each other in the circumferential direction. This may result in insufficient communication between the refrigerant flow passages, or complete disconnection of the refrigerant flow passages, between these core blocks. Such a state does not allow a sufficient refrigerant to flow through the refrigerant flow passages, which may end up with insufficient cooling of the rotor core.

The present disclosure provides a technology that allows a sufficient refrigerant to flow through refrigerant flow passages in a rotor provided with stepped skew.

A rotor of a motor according to a first aspect of the present disclosure includes: a shaft extending along an axial direction; a rotor core having a plurality of core blocks that is provided on an outer circumferential surface of the shaft and arrayed along the axial direction, each of the core blocks including a plurality of magnets and a refrigerant flow passage extending along the axial direction, the core blocks including a first core block and a second core block provided with stepped skew with respect to the first core block; and at least one plate that is provided on the outer circumferential surface of the shaft and arrayed together with the core blocks along the axial direction, the at least one plate including a refrigerant communication plate disposed between the first core block and the second core block, the refrigerant communication plate including a communication flow passage that is configured to connect the refrigerant flow passage of the first core block with the refrigerant flow passage of the second core block.

In this configuration, the refrigerant communication plate is provided between the first core block and the second core block that are provided with stepped skew. The refrigerant communication plate is provided with a communication flow passage, and the refrigerant flow passage of the first core block and the refrigerant flow passage of the second core block communicate with each other through the communication flow passage. Thus, the refrigerant is allowed to flow smoothly through the refrigerant flow passages also in the rotor provided with stepped skew.

In the rotor in the above-described aspect, each of the core blocks is provided with a magnet slot that extends along the axial direction and houses at least one of the magnets; and the refrigerant flow passage lies inside the magnet slot and is demarcated between an outer surface of the magnet and an inner surface of the magnet slot.

In this configuration, the refrigerant is allowed to flow through the inside of the magnet slot housing the magnet. Thus, the magnet provided in each core block can be directly cooled by the refrigerant.

In the rotor in the above-described aspect, the communication flow passage of the refrigerant communication plate extends in an arc shape along a circumferential direction centered on a rotational axis of the rotor.

In the rotor in the above-described aspect, the refrigerant communication plate is made of a non-magnetic body.

In the rotor in the above-described aspect, the refrigerant communication plate is made of the same material as the core block.

In the rotor in the above-described aspect, the outer circumferential surface of the shaft is provided with a refrigerant supply port through which the refrigerant is discharged; the at least one plate further includes a refrigerant supply plate disposed adjacent to the first core block; and the refrigerant supply plate is provided with a refrigerant supply flow passage that is configured to connect the refrigerant supply port of the shaft with the refrigerant flow passage of the first core block.

In this configuration, the refrigerant discharged through the refrigerant supply port of the shaft is supplied to the refrigerant flow passage of the first core block through the refrigerant supply flow passage of the refrigerant supply plate. The refrigerant supplied to the refrigerant flow passage of the first core block is supplied to the refrigerant flow passage of the second core block through the communication flow passage of the refrigerant communication plate. Thus, the refrigerant supplied from the shaft is allowed to flow smoothly to the first core block and the second core block provided with stepped skew.

In the rotor in the above-described aspect, the core blocks further include a third core block disposed adjacent to the first core block with the refrigerant supply plate in between; and the refrigerant supply flow passage of the refrigerant supply plate further is configured to connect the refrigerant supply port of the shaft with the refrigerant flow passage of the third core block.

In the rotor in the above-described aspect, the core blocks further include a fourth core block provided with stepped skew with respect to the third core block; the at least one plate further includes a second refrigerant communication plate disposed between the third core block and the fourth core block; and the second refrigerant communication plate is provided with a communication flow passage that is configured to connect the refrigerant flow passage of the third core block with the refrigerant flow passage of the fourth core block.

In the rotor in the above-described aspect, the first core block lies farthest on one side in the axial direction of the core blocks; the at least one plate further includes an end plate lying adjacent to the first core block and on the one side in the axial direction of the first core block; and the end plate is provided with a refrigerant supply flow passage through which a refrigerant is supplied to the refrigerant flow passage of the first core block.

In the rotor in the above-described aspect, the outer circumferential surface of the shaft is provided with a refrigerant supply port through which the refrigerant is discharged; and the refrigerant supply flow passage of the end plate is configured to connect the refrigerant supply port of the shaft with the refrigerant flow passage of the first core block.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view schematically showing the configuration of a rotor 2 of Embodiment 1;
FIG. 2A shows a sectional view of a first core block 22a along line IIA-IIA of FIG. 1;
FIG. 2B shows a sectional view of a second core block 22b along line IIB-IIB of FIG. 1;
FIG. 3 is an enlarged sectional view showing a state of part III of the sectional view of the first core block 22a of FIG. 2A;
FIG. 4 shows a sectional view of a supply plate 24 of Embodiment 1 as seen from the direction of a rotational axis R;
FIG. 5 shows a sectional view of a first communication plate 26a of Embodiment 1 as seen from the direction of the rotational axis R;
FIG. 6 is a view schematically showing the configuration of a rotor 102 of Embodiment 2; and
FIG. 7 shows a sectional view of an end plate 130b of Embodiment 2 as seen from the direction of the rotational axis R.

### DETAILED DESCRIPTION OF EMBODIMENTS

### Embodiment 1

A rotor 2 of Embodiment 1 will be described with reference to the drawings. As one example, the rotor 2 of Embodiment 1 is one of constituent parts of an electrically operated motor and constitutes a rotating body in the electrically operated motor. For example, the electrically operated motor may be a three-phase alternating-current motor. The configuration described in Embodiment 1 can be adopted not only for a three-phase alternating-current motor but also for other types of electric motors as well.

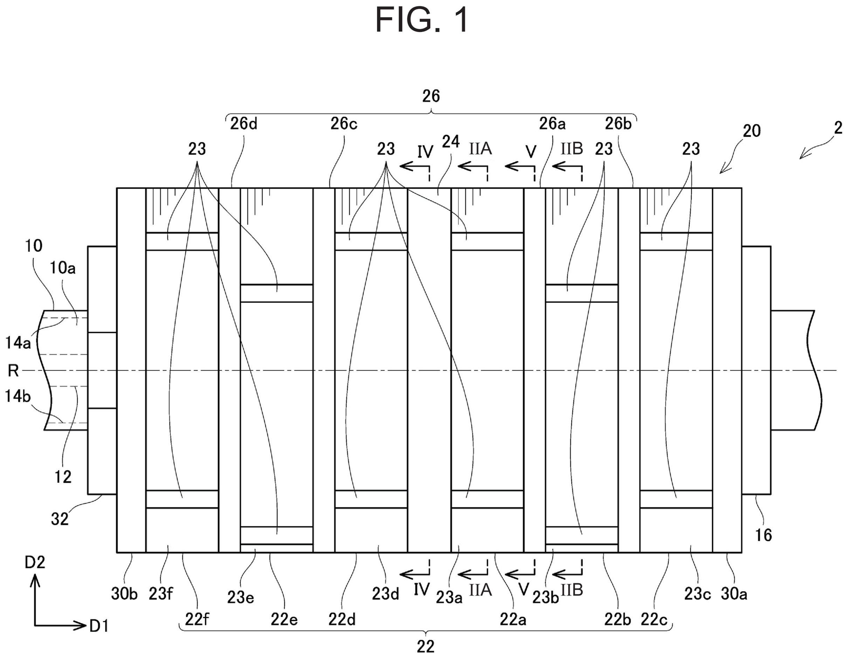

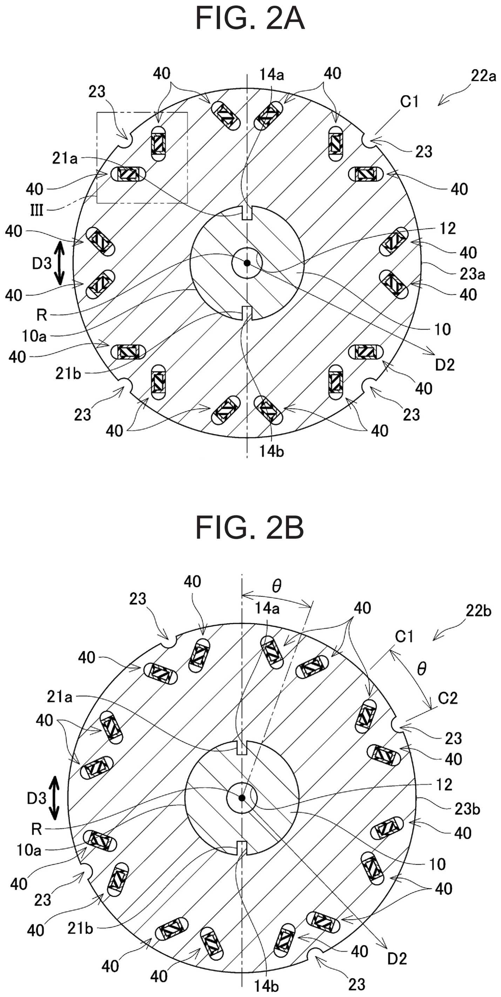

As shown in FIG. 1, FIG. 2A, and FIG. 2B, the rotor 2 of Embodiment 1 includes a shaft 10, a rotor core 20, and a pair of end plates 30a, 30b. Here, in the present specification, a direction parallel to a rotational axis R of the rotor 2 is defined as an axial direction (direction D1 in the drawings); a direction orthogonal to the rotational axis R is defined as a radial direction (direction D2 in the drawings); and a direction perpendicular to the axial direction and the radial direction is defined as a circumferential direction (D3 in the drawings).

The shaft 10 extends along the rotational axis R of the rotor 2. The shaft 10 has a shaft flow passage 12 through which a refrigerant flows. The shaft flow passage 12 extends through an inside of the shaft 10 along the rotational axis R of the rotor 2. The refrigerant is supplied from an outside to the shaft flow passage 12. An outer circumferential surface 10a of the shaft 10 is provided with a pair of key grooves 14a, 14b. The key grooves 14a, 14b are formed at opposite positions in the circumferential direction, although not particularly restricted thereto. The key grooves 14a, 14b engage with a pair of protruding portions 21a, 21b, respectively, formed on each core block 22. The outer circumferential surface 10a of the shaft 10 is provided with an engaging portion 16. The engaging portion 16 bulges in a radial direction from the outer circumferential surface 10a of the shaft 10, and positions the end plate 30a and the core blocks 22 in the axial direction. The specific configuration of the shaft 10 is not particularly restricted.

The rotor core 20 has a plurality of core blocks 22. The core blocks 22 are provided on the outer circumferential surface 10a of the shaft 10 and arrayed along the axial direction. The core blocks 22 include three core blocks 22a, 22b, 22c disposed on one side in the axial direction (the right side in FIG. 1) and three core blocks 22d, 22e, 22f disposed on the other side in the axial direction (the left side in FIG. 1). Hereinafter, of the three core blocks 22a, 22b, 22c lying on the one side in the axial direction, the core block 22a lying at a center portion in the axial direction will be referred to as the first core block 22a, and the core block 22b adjacent thereto will be referred to as the second core block 22b. Of the three core blocks 22d, 22e, 22f lying on the other side in the axial direction, the core block 22d lying at a center portion in the axial direction will be referred to as the third core block 22d, and the core block 22e adjacent thereto will be referred to as the fourth core block 22e. The number of the core blocks 22 is not particularly restricted.

The core blocks 22 each have a cylindrical shape and are disposed coaxially on the rotational axis R of the rotor 2. Each core block 22 is made of a soft magnetic material, for example, magnetic steel. The specific configuration of each core block 22 is not particularly restricted. As one example, each core block 22 in Embodiment 1 has a structure in which magnetic steel sheets are stacked.

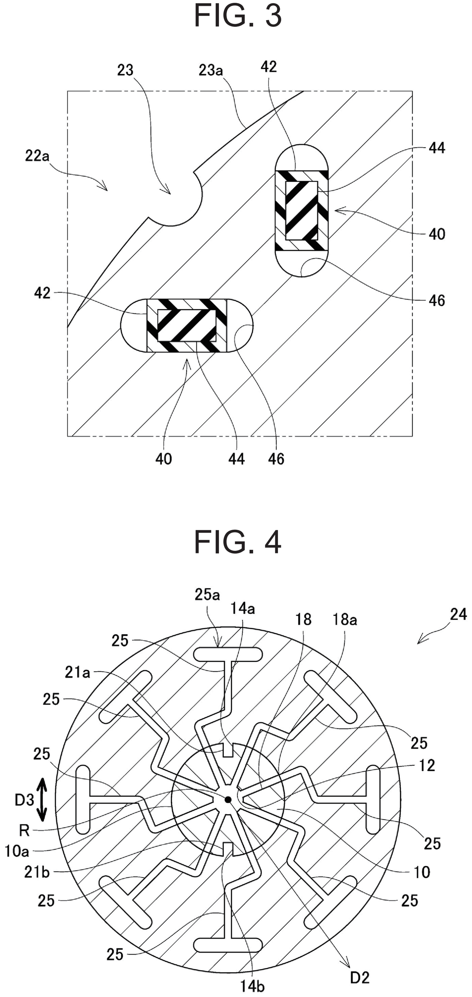

Each core block 22 is provided with a plurality of magnet slots 40. As one example, as shown in FIG. 2A, in the first core block 22a, the magnet slots 40 are arrayed in the circumferential direction along an outer circumferential surface 23a of the first core block 22a. As shown in FIG. 3, magnets 44 are housed inside the respective magnet slots 40. Each magnet 44 extends along the axial direction. Each magnet 44 is fixed in the magnet slot 40 by a bonding layer 42. The bonding layer 42 is formed by an insulative adhesive.

Inside each magnet slot 40, a refrigerant flow passage 46 is demarcated between an outer surface of the magnet 44 and an inner surface of the magnet slot 40. The refrigerant flow passage 46 also extends along the axial direction. In this configuration, making the refrigerant flow through the refrigerant flow passage 46 can directly cool the magnet 44 housed inside the magnet slot 40 by the refrigerant. As another form of implementation, the refrigerant flow passage 46 may be provided independently of the magnet slot 40. That is, in each core block 22, one or more holes demarcating the refrigerant flow passage 46 may be provided along the axial direction, separately from the magnet slots 40.

As shown in FIG. 2B, also in the second core block 22b, a plurality of magnet slots 40 is arrayed in the circumferential direction along an outer circumferential surface 23b of the second core block 22b. Inside each magnet slot 40, a magnet 44 is housed and a refrigerant flow passage 46 is demarcated. That is, the second core block 22b has the same configuration as the first core block 22a. As will be described in detail later, stepped skew is provided between the first core block 22a and the second core block 22b. Therefore, the positions of the protruding portions 21a, 21b engaging with the key grooves 14a, 14b are shifted between the first core block 22a and the second core block 22b by an amount corresponding to an angular difference of the stepped skew. While this is not shown, the other core blocks 22c, 22d, 22e, 22f than the above-described ones have the same configuration as the first core block 22a, except for the positions of the protruding portions 21a, 21b.

Each core block 22 has a plurality of outer circumferential grooves 23 provided in an outer surface. The outer circumferential grooves 23 are formed for the purpose of reducing torque ripple of the electrically operated motor configured using the rotor 2. In the rotor 2 of this embodiment, each core block 22 is provided with four outer circumferential grooves 23, although not particularly restricted thereto. Each outer circumferential groove 23 extends along the axial direction.

The core blocks 22 are provided with stepped skew (also referred to as "offset skew"). Stepped skew means offsetting two adjacent core blocks 22 from each other in the circumferential direction. For example, as shown in FIG. 2A and FIG. 2B, stepped skew of an angle θ is provided between the first core block 22a and the second core block 22b. That is, the second core block 22b is offset from the first core block 22a by the angle θ in the circumferential direction. Accordingly, the positions of the magnet slots 40 (i.e., the positions of the magnets 44 and the positions of the refrigerant flow passages 46) are offset between the first core block 22a and the second core block 22b by the angle θ. The positions of the outer circumferential grooves 23 are also offset by the angle θ between the first core block 22a and the second core block 22b. For example, as shown in FIG. 2A, in the first core block 22a, the outer circumferential groove 23 is present at a position C1 in the circumferential direction, whereas as shown in FIG. 2B, in the second core block 22b, the outer circumferential groove 23 is present at a position C2 offset from the position C1 by the angle θ in the circumferential direction.

Similarly, stepped skew is provided also between the second core block 22b and another core block 22c adjacent thereto. Stepped skew is provided also between the third core block 22d and the fourth core block 22e adjacent thereto. Stepped skew is provided also between the fourth core block 22e and another core block 22f adjacent thereto. On the other hand, stepped skew is not provided between the first core block 22a and the third core block 22d. That is, in the rotor 2 of this embodiment, the three core blocks 22a, 22b, 22c disposed on the one side in the axial direction (the right side in FIG. 1) and the three core blocks 22d, 22e, 22f disposed on the other side in the axial direction (the left side in FIG. 1) have a bilaterally symmetric structure.

The core blocks 22 are pressed in the axial direction by the end plates 30a, 30b. The end plates 30a, 30b are respectively disposed at both ends of the core blocks 22 in the axial direction. One end plate 30a is disposed adjacent to the engaging portion 16, and the position thereof in the axial direction is fixed by the engaging portion 16. The other end plate 30b is disposed adjacent to a nut 32. The nut 32 is fastened into the shaft 10 and presses the core blocks 22 in the axial direction through the other end plate 30b.

As shown in FIG. 1, the rotor 2 of this embodiment further includes a plurality of plates 24, 26. The plates 24, 26 are provided on the outer circumferential surface 10a of the shaft 10 and arrayed together with the core blocks 22 along the axial direction. The plates 24, 26 include a supply plate 24 and a plurality of communication plates 26. The communication plates 26 include a first communication plate 26a, a second communication plate 26b, a third communication plate 26c, and a fourth communication plate 26d. The supply plate 24 and the communication plates 26 are made of aluminum that is a non-magnetic body, although not particularly restricted thereto. However, the supply plate 24 and the communication plates 26 may be made of a soft magnetic material, for example, magnetic steel. Or the supply plate 24 and the communication plates 26 may be made of a non-metal material, such as resin.

The supply plate 24 is disposed between the first core block 22a and the third core block 22d. As shown in FIG. 4, in the supply plate 24, a plurality of refrigerant supply flow passages 25 is formed. The refrigerant supply flow passages 25 are arrayed at regular intervals along the circumferential direction. The refrigerant supply flow passages 25 are configured to connect the shaft flow passage 12 provided in the shaft 10 with the refrigerant flow passages 46 provided in the first core block 22a. Thus, the refrigerant flowing through the shaft flow passage 12 is supplied to each refrigerant flow passage 46 of the first core block 22a through the refrigerant supply flow passages 25 of the supply plate 24. Moreover, the refrigerant supply flow passages 25 are configured to connect the shaft flow passage 12 provided in the shaft 10 with the refrigerant flow passages 46 provided in the third core block 22d. Thus, the refrigerant flowing through the shaft flow passage 12 is also supplied to each refrigerant flow passage 46 of the third core block 22d through the refrigerant supply flow passages 25 of the supply plate 24.

The specific configuration of the supply plate 24 is not particularly restricted. As one example, in the rotor 2 of this embodiment, a plurality of distribution flow passages 18 extending in the radial direction from the shaft flow passage 12 is formed in the shaft 10. The distribution flow passages 18 each extend to the outer circumferential surface 10a of the shaft 10 and form a plurality of refrigerant supply ports 18a in the outer circumferential surface 10a of the shaft 10. The refrigerant supply flow passages 25 of the supply plate 24 are respectively connected to the refrigerant supply ports 18a of the shaft 10. A downstream end 25a of the refrigerant supply flow passage 25 lies at a position facing the refrigerant flow passage 46 of the first core block 22a and the refrigerant flow passage 46 of the third core block 22d and connected to the refrigerant flow passages 46. The supply plate 24 is provided with protruding portions 21a, 21b that engage with the key grooves 14a, 14b of the shaft 10.

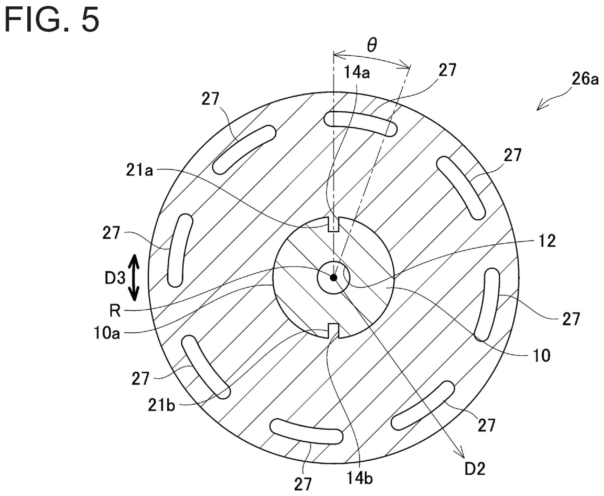

As described above, the communication plates 26 include the first communication plate 26a, the second communication plate 26b, the third communication plate 26c, and the fourth communication plate 26d. The first communication plate 26a is disposed between the first core block 22a and the second core block 22b. As shown in FIG. 5, the first communication plate 26a is provided with a plurality of communication flow passages 27. Each of the communication flow passages 27 extends in an arc shape along the circumferential direction and is configured to connect the refrigerant flow passage 46 of the first core block 22a with the refrigerant flow passage 46 of the second core block 22b. Here, each communication flow passage 27 extends in a range of an angle θ in the circumferential direction. This angle θ corresponds to the angle θ of the stepped skew provided between the first core block 22a and the second core block 22b. That is, each communication flow passage 27 extends from a position facing the refrigerant flow passage 46 of the first core block 22a to a position facing the refrigerant flow passage 46 of the second core block 22b.

The other communication plates 26b, 26c, 26d have the same configuration and function. The second communication plate 26b is disposed between the second core block 22b and another core block 22c communicating therewith. The second communication plate 26b is provided with communication flow passages 27 that are configured to connect the refrigerant flow passages 46 of the second core block 22b with the refrigerant flow passages 46 of the other core block 22c. The third communication plate 26c is disposed between the third core block 22d and the fourth core block 22e. The third communication plate 26c is provided with communication flow passages 27 that are configured to connect the refrigerant flow passages 46 of the third core block 22d with the refrigerant flow passages 46 of the fourth core block 22e. The fourth communication plate 26d is disposed between the fourth core block 22e and another core block 22f adjacent thereto. The fourth communication plate 26d is provided with communication flow passages 27 that are configured to connect the refrigerant flow passages 46 of the fourth core block 22e with the refrigerant flow passages 46 of the other core block 22f.

As has been described above, in the rotor 2 of this embodiment, the communication plate 26 is provided between two core blocks 22 provided with stepped skew. Each communication plate 26 is provided with the communication flow passages 27, and the refrigerant flow passages 46 of the two core blocks 22 communicate with each other through the communication flow passages 27. Thus, also in the rotor 2 provided with stepped skew, a sufficient refrigerant is allowed to flow smoothly through the refrigerant flow passages 46. The refrigerant flowing through the refrigerant flow passages 46 reaches each of the end plates 30a, 30b, is discharged through discharge ports (not shown) provided in the end plates 30a, 30b, and can be supplied to, for example, a coil end of a stator.

In the rotor 2 of this embodiment, the communication flow passages 27 of the communication plates 26 extend in an arc shape along the circumferential direction. In this configuration, a centrifugal force attributable to rotation of the rotor 2 acts perpendicularly on the flow of the refrigerant in the communication flow passages 27, which allows the refrigerant to flow smoothly through the communication flow passages 27 without being influenced by this centrifugal force.

In the rotor 2 of this embodiment, the communication plates 26 are made of a non-magnetic body. This configuration can reduce a motive power loss of the motor adopting the rotor 2. The manufacturing cost of the rotor 2 can also be reduced. However, as another form of implementation, the communication plates 26 may be made of a soft magnetic material, for example, magnetic steel. That is, the communication plates 26 may be made of the same material as the core block 22. In this configuration, the communication plates 26 can function like the core blocks 22, which can improve the output torque of the motor adopting the rotor 2.

### Embodiment 2

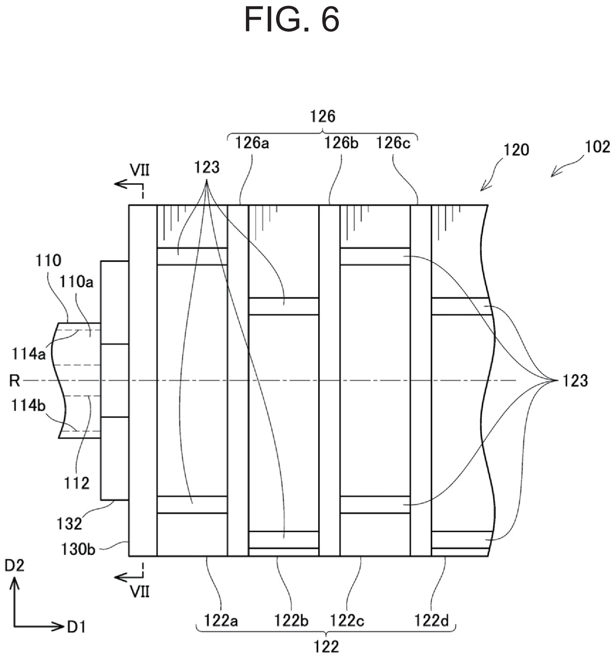

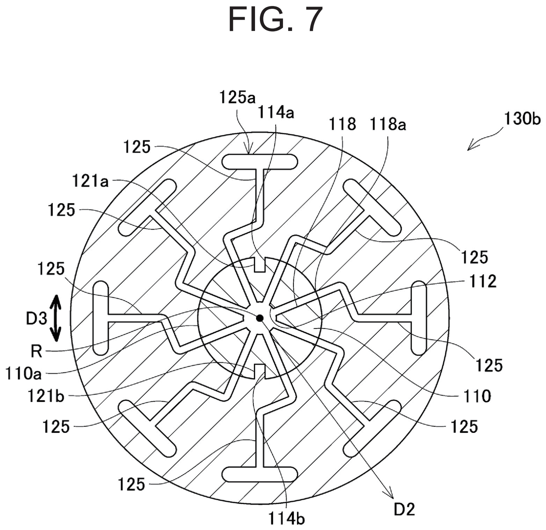

A rotor 102 of Embodiment 2 will be described with reference to FIG. 6 and FIG. 7. The rotor 102 of Embodiment 2 is also one of constituent parts of an electrically operated motor and constitutes a rotating body of the electrically operated motor. Unless inconsistent with the following description, what will not be particularly mentioned in this embodiment is the same as in the rotor 2 of Embodiment 1.

As shown in FIG. 6, the rotor 102 of this embodiment includes a shaft 110, a rotor core 120, and a pair of end plates 130b. In FIG. 6, only one end plate 130b is shown while depiction of the other end plate is omitted. The shaft 110 of this embodiment has the same configuration as the shaft 10 of Embodiment 1. That is, the shaft 110 has a shaft flow passage 112. The shaft flow passage 112 extends inside the shaft 110 along a rotational axis R of the rotor 102. An outer circumferential surface 110a of the shaft 110 is provided with a pair of key grooves 114a, 114b and an engaging portion (not shown; see the engaging portion 16 in FIG. 1).

The rotor core 120 has a plurality of core blocks 122. The core blocks 122 are provided on the outer circumferential surface 110a of the shaft 110 and arrayed along the axial direction. The core blocks 122 include a first core block 122a, a second core block 122b, a third core block 122c, and a fourth core block 122d. The core blocks 122a to 122d are arrayed in this order along the axial direction. That is, the first core block 122a lies farthest on the one side in the axial direction of the core blocks 122. The second core block 122b is adjacent to the first core block 122a; the third core block 122c is adjacent to the second core block 122b; and the fourth core block 122d is adjacent to the third core block 122c. The number of the core blocks 122 is not particularly restricted.

Each core block 122 in this embodiment has the same configuration as the core block 22 in Embodiment 1. That is, like the core blocks 22 shown in FIG. 2A and FIG. 2B, each core block 122 has a plurality of magnet slots 40, and a bonding layer 42, a magnet 44, and a refrigerant flow passage 46 are provided in each magnet slot 40. As described above, the refrigerant flow passage 46 lies inside the magnet slot 40. However, as another form of implementation, each core block 122 may be provided with one or more holes demarcating the refrigerant flow passage 46 along the axial direction, separately from the magnet slots 40. An outer surface of each core block 122 is also provided with a plurality of outer circumferential grooves 123.

Also in the rotor 102 of this embodiment, the core blocks 122 are provided with stepped skew. Thus, the positions of the magnet slots 40 (i.e., the positions of the magnets 44 and the positions of the refrigerant flow passages 46) are offset in the circumferential direction between two adjacent core blocks 122. The core blocks 122 are pressed in the axial direction by the end plates 130b.

As shown in FIG. 7, in the rotor 102 of this embodiment, a plurality of refrigerant supply flow passages 125 is formed in the end plate 130b. The configuration and function of the refrigerant supply flow passages 125 are the same as those of the refrigerant supply flow passages 25 in Embodiment 1. That is, while in the rotor 2 of Embodiment 1, the refrigerant flow passages 25 are provided in the supply plate 24, in the rotor 102 of Embodiment 2, the refrigerant supply flow passages 125 are provided in the end plate 130b. The refrigerant supply flow passages 125 of the end plate 130b are configured to connect the shaft flow passage 112 provided in the shaft 110 with the refrigerant flow passages 46 provided in the first core block 122a. Thus, the refrigerant flowing through the shaft flow passage 112 is supplied to each refrigerant flow passage 46 of the first core block 122a through the refrigerant supply flow passages 125 of the end plate 130b.

The configuration of the refrigerant supply flow passages 125 is not particularly restricted. As one example, a plurality of distribution flow passages 118 is formed in the shaft 110, and the distribution flow passages 118 form a plurality of refrigerant supply ports 118a in the outer circumferential surface 110a of the shaft 110. The refrigerant supply flow passages 125 of the end plate 130b are respectively connected to the refrigerant supply ports 118a of the shaft 110. A downstream end 125a of the refrigerant supply flow passage 125 lies at a position facing the refrigerant flow passage 46 of the first core block 122a and is connected to the refrigerant flow passage 46. As another form of implementation, instead of the refrigerant supply flow passages 125 being provided in the end plate 130b, the supply plate 24 described in Embodiment 1 may be disposed between the end plate 130b and the first core block 122a.

The rotor 102 of this embodiment further includes a plurality of communication plates 126. Each communication plate 126 has the same configuration as the communication plates 26 in Embodiment 1. That is, like the communication plate 26 shown in FIG. 5, each communication plate 126 is also provided with a plurality of communication flow passages 27. The communication plates 126 include a first communication plate 126a, a second communication plate 126b, and a third communication plate 126c. The first communication plate 126a is disposed between the first core block 122a and the second core block 122b. Thus, the refrigerant flow passages 46 of the first core block 122a and the refrigerant flow passages 46 of the second core block 122b are connected to each other through the communication flow passages 27 of the first communication plate 126a. The second communication plate 126b is disposed between the second core block 122b and the third core block 122c, and the third communication plate 126c is disposed between the third core block 122c and the fourth core block 122d. Thus, the refrigerant flow passages 46 of the core blocks 122 are sequentially connected to one another along the axial direction as the communication plates 126 are interposed in between. The key grooves 114a, 114b engage with each of the core blocks 122, the end plates 130b, and the protruding portions 121a, 121b formed on the communication plates 126.

As has been described above, also in the rotor 102 of this embodiment, the communication plate 126 is provided between two core blocks 122 provided with stepped skew. Each communication plate 126 is provided with the communication flow passages 27, and the refrigerant flow passages 46 of two core blocks 122 communicate with each other through the communication flow passages 27. Thus, also in the rotor 102 provided with stepped skew, a sufficient refrigerant is allowed to flow through the refrigerant flow passages 46. The refrigerant flowing through the refrigerant flow passages 46 reaches the other end plate (not shown), is discharged through a discharge port (not shown) provided in that end plate, and can be supplied to, for example, a coil end of a stator.

Although specific examples of the technology disclosed by the present specification have been described, such examples are provided only for illustrative purposes and are not intended to limit the scope of claims. The technology described in the claims includes various modifications and alterations of the specific examples illustrated above. The technical elements described in the present specification or the drawings exert technical utility independently or by various combinations, and are not limited to the combinations described in the claims at the time of the filing. Further, the technology illustrated in the present specification or the drawings can achieve a plurality of purposes at the same time, and has technical utility simply by achieving one of these purposes.

## Claims

1. A rotor (2; 102) of a motor, comprising:
a shaft (10; 110) extending along an axial direction;
a rotor core (20; 120) having a plurality of core blocks (22; 122) that is provided on an outer circumferential surface (10a; 110a) of the shaft (10; 110) and arrayed along the axial direction,
each of the core blocks (22; 122) including a plurality of magnets (44) and a refrigerant flow passage (46) extending along the axial direction,
the core blocks (22; 122) including a first core block (22a; 122a) and a second core block (22b; 122b) provided with stepped skew with respect to the first core block (22a; 122a); and
at least one plate that is provided on the outer circumferential surface (10a; 110a) of the shaft (10; 110) and arrayed together with the core blocks (22; 122) along the axial direction,
the at least one plate including a refrigerant communication plate (26; 126) disposed between the first core block (22a; 122a) and the second core block (22b; 122b), and
the refrigerant communication plate (26; 126) including a communication flow passage (27) that is configured to connect the refrigerant flow passage (46) of the first core block (22a; 122a) with the refrigerant flow passage (46) of the second core block (22b; 122b).

2. The rotor (2; 102) according to claim 1, wherein:
each of the core blocks (22; 122) is provided with a magnet slot (40) that extends along the axial direction and houses at least one of the magnets (44); and
the refrigerant flow passage (46) lies inside the magnet slot (40) and is demarcated between an outer surface of the magnet (44) and an inner surface of the magnet slot (40).

3. The rotor (2; 102) according to claims 1 or 2, wherein the communication flow passage (27) of the refrigerant communication plate (26; 126) extends in an arc shape along a circumferential direction centered on a rotational axis of the rotor (2; 102).

4. The rotor (2; 102) according to any one of claims 1 to 3, wherein the refrigerant communication plate (26; 126) is made of a non-magnetic body.

5. The rotor (2; 102) according to any one of claims 1 to 3, wherein the refrigerant communication plate (26; 126) is made of the same material as the core block (22; 122).

6. The rotor according to any one of claims 1 to 5, wherein:
the outer circumferential surface (10a; 110a) of the shaft (10; 110) is provided with a refrigerant supply port (18a; 118a) through which a refrigerant is discharged;
the at least one plate further includes a refrigerant supply plate (24) disposed adjacent to the first core block (22a; 122a); and
the refrigerant supply plate (24) is provided with a refrigerant supply flow passage (25; 125) that is configured to connect the refrigerant supply port (18a; 118a) of the shaft (10; 110) with the refrigerant flow passage (46) of the first core block (22a; 122a).

7. The rotor according to claim 6, wherein:
the core blocks (22; 122) further include a third core block (22d; 122c) disposed adjacent to the first core block (22a; 122a) with the refrigerant supply plate (24) in between; and
the refrigerant supply flow passage (25; 125) of the refrigerant supply plate (24) is further configured to connect the refrigerant supply port (18a; 118a) of the shaft (10; 110) with the refrigerant flow passage (46) of the third core block (22d; 122c).

8. The rotor according to claim 7, wherein:
the core blocks (22; 122) further include a fourth core block (22e; 122d) provided with stepped skew with respect to the third core block (22d; 122c);
the at least one plate further includes a second refrigerant communication plate (26c; 126b) disposed between the third core block (22d; 122c) and the fourth core block (22e; 122d); and
the second refrigerant communication plate (26c; 126b) is provided with a communication flow passage (27) that is configured to connect the refrigerant flow passage (46) of the third core block (22d; 122c) and the refrigerant flow passage (46) of the fourth core block (22e; 122d).

9. The rotor according to any one of claims 1 to 5, wherein:
the first core block (122a) lies farthest on one side in the axial direction of the core blocks (122);
the at least one plate further includes an end plate (130b) lying adjacent to the first core block (122a) and on the one side in the axial direction of the first core block (122a); and
the end plate (130b) is provided with a refrigerant supply flow passage (125) through which a refrigerant is supplied to the refrigerant flow passage (46) of the first core block (122a).

10. The rotor according to claim 9, wherein:
the outer circumferential surface (110a) of the shaft (110) is provided with a refrigerant supply port (118a) through which the refrigerant is discharged; and
the refrigerant supply flow passage (125) of the end plate (130b) is configured to connect the refrigerant supply port (118a) of the shaft (110) with the refrigerant flow passage (46) of the first core block (122a).
